# FASCICULE DE BREVET EUROPEEN

(11) **EP 2 774 848 B1**
(45) Date de publication et mention de la délivrance du brevet: **12.08.2015**
(21) Numéro de dépôt: 14000568.7
(22) Date de dépôt: 18.02.2014
(51) Int. Cl.: B64D 9/00, B64D 1/22, B64C 27/04

(54) **Système de fixation d'une charge à un giravion, et un giravion**
Befestigungssystem einer Ladung an einem Drehflügelflugzeug, und ein Drehflügelflugzeug
System for attaching a load to a rotorcraft, and rotorcraft

(30) Priorité: 07.03.2013 FR 1300520
(43) Date de publication de la demande: 10.09.2014
(73) Titulaire: Airbus Helicopters, 13725 Marignane Cedex (FR)
(72) Inventeur: Prud'Homme-Lacroix, Pierre, F-13127 Vitrolles (FR)
(74) Mandataire: GPI & Associés

(56) Documents cités:
- DE-A1- 19 623 562
- GB-A- 1 594 443
- US-A- 4 637 575
- US-A- 5 190 250
- US-A- 6 059 266

## Description

La présente invention concerne un système de fixation d'une charge à un giravion, et un giravion muni du système de fixation. De plus, l'invention vise le procédé mis en oeuvre.

Le domaine technique de l'invention est donc celui des dispositifs de fixation d'une charge externe à un aéronef, et notamment un aéronef muni d'une voilure tournante.

Classiquement, un giravion comporte un fuselage portant au moins un rotor de sustentation, voire de propulsion. Le giravion peut alors être pourvu d'un système de fixation amovible pour porter une charge externe.

Un tel système de fixation peut inclure usuellement un moyen d'accrochage. Un tel moyen d'accrochage peut comprendre un crochet-délesteur tournant ou non tournant fixé au fuselage. Une élingue est alors accrochée à ce crochet-délesteur afin de permettre l'emport de charges externes.

Le moyen d'accrochage est avantageusement positionné sous le fuselage proche de l'alignement d'un rotor de sustentation pour des raisons de centrage. Cependant, le giravion peut être dépourvu d'élément structural susceptible de porter le moyen d'accrochage dans une telle zone.

Dès lors, le système de fixation peut inclure une poutre de soutènement portant le moyen d'accrochage. Cette poutre de soutènement est alors fixée à des éléments structuraux du giravion.

Une telle poutre de soutènement peut comprendre deux profilés verticaux reliés par une âme horizontale. Le crochet-délesteur est logé dans un logement délimité par les profilés verticaux et l'âme horizontale. Plus précisément, le crochet-délesteur peut s'étendre selon la direction d'extension des profilés verticaux, ou selon une direction orthogonale à cette direction d'extension.

Ce système de fixation est utilisé dans le domaine aéronautique avec satisfaction.

Cependant, la poutre de soutènement peut s'avérer agressive en cas de crash du giravion.

En effet, la structure de la poutre est relativement indéformable et risque de pénétrer dans le fuselage sous l'effet de la réaction du sol.

La situation est d'autant plus compliquée lorsqu'un giravion comporte des réservoirs de carburant dans la barque du fuselage supportant la poutre de soutènement.

Dans la zone basse du fuselage, le giravion comporte alors en particulier une platine accueillant par exemple des pompes, des jaugeurs et autres équipements du circuit de carburant. Cette platine est conçue pour supporter un contact avec le sol en cas de crash et pour préserver l'étanchéité du réservoir. Toutefois, un impact avec la poutre de soutènement peut s'avérer destructeur.

L'arrière plan technologique éloigné de l'invention comporte les documents US 5 190 250, DE 196 23 562, US 4 637 575, US 6 059 266, et GB 1 594 443.

La présente invention a alors pour objet de proposer un système de fixation innovant pour porter une charge avec un giravion, ce système de fixation visant à minimiser les risques de perforation du fuselage en cas de crash.

Selon l'invention, un système de fixation est muni d'un moyen d'accrochage pour accrocher une charge externe à un giravion, ce système de fixation ayant une poutre de soutènement pour attacher le moyen d'accrochage à un giravion, la poutre de soutènement ayant une âme horizontale et deux profilés latéraux s'étendant en élévation à partir de l'âme horizontale, le système de fixation ayant un organe de soutènement dans un espace central séparant les profilés latéraux pour porter un moyen d'accrochage, l'organe de soutènement étant relié à chaque profilé latéral. Le moyen d'accrochage peut être un simple crochet ou encore un crochet-délesteur par exemple.

Ce système est notamment remarquable en ce que chaque profilé latéral inclut un voile en élévation relié à l'âme horizontale, chaque voile présentant un angle obtus avec l'âme horizontale dans l'espace central, chaque profilé latéral étant un profilé oblique pouvant se rapprocher de l'âme horizontale sous l'effet d'efforts verticaux. Un voile s'étend en élévation à partir de l'âme horizontale vers le sol lorsque le système de fixation est agencé sur un giravion.

Chaque profilé latéral est donc un profilé oblique, contrairement aux profilés verticaux usuels.

Les profilés latéraux obliques de la poutre de soutènement présentent une rigidité en flexion suffisante pour maintenir en position la poutre de soutènement durant un vol. Cette rigidité en flexion est sensiblement équivalente à la rigidité en flexion d'une poutre de soutènement usuelle.

Par contre, lors d'un atterrissage et notamment durant un crash, les profilés latéraux peuvent entrer en contact avec le sol. Dès lors, l'inclinaison des profilés latéraux augmente. Les profilés latéraux s'écrasent en s'écartant l'un de l'autre.

Ainsi, le système de fixation se déforme de manière à atteindre une forme moins agressive pour le fuselage, et le cas échéant pour un réservoir.

L'inclinaison des voiles latéraux régit les capacités d'écrasement du système de fixation. Plus les voiles sont proches de la verticale, plus le mouvement d'écrasement est difficile à initier. Le concepteur détermine alors l'angle obtus des voiles en fonction des charges mises en jeu, et notamment des charges d'utilisation du système de fixation comparées aux charges de contact admissibles avec le fuselage.

Lorsque le mouvement d'écrasement est initié, l'angle obtus des voiles latéraux s'accroît. Ce phénomène est instable et conduit à l'écrasement du système de fixation.

Ce système de fixation peut de plus comporter une ou plusieurs des caractéristiques additionnelles qui suivent.

Par exemple, au moins un voile s'étendant d'une extrémité de liaison reliée à l'âme horizontale vers une extrémité libre, au moins un profilé latéral comporte une portion d'appui solidaire de l'extrémité libre du voile.

Cette portion d'appui entre alors en contact avec le sol lors d'un crash pour favoriser l'introduction d'efforts verticaux dans les profilés latéraux.

La portion d'appui peut être une partie constitutive d'un voile. Par exemple, on plie une plaque pout obtenir un voile et la portion d'appui.

A titre de variante, la portion d'appui peut comprendre un épaulement ou équivalent pour être fixée par des moyens usuels à un voile, tels que des rivets, des vis de fixation, des moyens de soudure ou de collage par exemple. La portion d'appui a alors une forme comprenant un tronçon horizontal en regard du sol et un tronçon oblique fixé à un voile, le tronçon horizontal étant séparé du tronçon oblique par une angulation égale audit angle obtus

Cette portion d'appui peut être parallèle à l'âme horizontale selon une variante.

Selon une autre variante, la portion d'appui peut être perpendiculaire au voile. D'autres inclinaisons sont possibles.

Selon un premier mode de réalisation, au moins un profilé latéral comprenant une semelle pour être fixé à l'âme horizontale, cette semelle est fixée à un voile par un dispositif de fixation.

Le voile d'un profilé est donc lié à l'âme par une semelle. A cet effet, le dispositif de fixation peut comprendre des moyens usuels tels que des rivets, des vis de fixation, des moyens de soudure ou de collage par exemple.

Les rivets ou équivalents présentent l'avantage d'induire des risques restreints de déchirure qui rendrait le système de fixation moins efficace, tout en étant suffisamment tolérant aux grands déplacements et ainsi permettre l'écrasement des voiles sans dislocation.

La semelle a alors une forme comprenant une portion horizontale fixée à l'âme horizontale et une portion oblique fixée à une voile, la portion horizontale étant séparée de la portion oblique par ledit angle obtus.

De plus, la semelle peut être agencée dans ledit espace central pour ne pas entraver l'écrasement du voile.

Selon un deuxième mode de réalisation, au moins un profilé latéral comprenant une semelle pour être fixé à l'âme horizontale, ladite semelle est solidaire d'un voile en formant une pièce mécanique d'un seul tenant.

Un procédé d'usinage dans la masse permet alors d'obtenir une pièce mécanique présentant une semelle de fixation et un voile. Cette pièce mécanique présente une semelle horizontale fixée à l'âme horizontale et un voile oblique, la semelle horizontale étant séparée du voile oblique par ledit angle obtus.

Ce voile peut comporter une zone de jonction à la semelle, la zone de jonction présentant un arrondi pour favoriser le fléchissement du voile vers l'âme horizontale.

Selon un troisième mode de réalisation, au moins un voile est articulé à ladite âme horizontale par une charnière, ce système de fixation incluant un moyen de retenue reliant un profilé latéral à l'autre profilé latéral.

Le voile devient ainsi particulièrement mobile par rapport à l'âme horizontale. Dès lors, le moyen de retenue empêche l'écrasement des profilés latéraux en dehors des phases de crash.

Ce moyen de retenue peut comprendre une tige munie d'une zone fusible apte à rompre en cas de crash pour autoriser l'écrasement de la poutre de soutènement.

Par ailleurs, l'organe de soutènement peut comporter une ferrure coopérant avec les profilés latéraux.

Cette ferrure est alors agencée dans l'espace central pour porter un moyen d'accrochage.

Cette ferrure peut être fixée à chaque voile entre par exemple le milieu de chaque voile et une extrémité de liaison de chaque voile qui est reliée à l'âme horizontale.

Dès lors, le système ménage une zone de fixation de la ferrure aux voiles qui est suffisante pour transmettre les charges et suffisamment résistant en fatigue. Cette zone de fixation reste néanmoins suffisamment restreinte pour au moins ne pas s'opposer au mouvement de dépliage.

Dès lors, l'influence de la ferrure sur l'écrasement est limitée. La fixation de la ferrure à un voile peut d'ailleurs être dimensionnée pour rompre à partir d'un seuil de cisaillement en cas d'efforts transversaux exercés par les voiles.

Au moins un profilé latéral comprenant une semelle pour être fixé à l'âme horizontale, la ferrure peut être fixée à chaque semelle.

La ferrure est alors fixée latéralement aux voiles et en élévation à une semelle.

Eventuellement, chaque voile comporte un orifice traversé par un axe de ladite ferrure. La ferrure peut alors introduire des efforts verticaux dans les profilés latéraux lorsque le système de fixation porte une charge externe.

En outre, la ferrure peut comporter un organe ressort pour éloigner un moyen d'accrochage d'une direction dirigée selon la pesanteur. Lors d'un crash, le moyen d'accrochage entre en contact avec le sol. L'inclinaison de ce moyen d'accrochage induit alors un basculement du moyen d'accrochage visant à le coucher.

Le risque d'endommagement du fuselage par le moyen d'accrochage est alors réduit.

Outre un système de fixation, l'invention vise un giravion comportant ce système de fixation.

De plus, l'invention vise aussi le procédé mis en oeuvre. Ainsi, l'invention concerne un procédé pour fixer une charge externe à un giravion à l'aide d'un système de fixation muni d'un moyen d'accrochage, ce système de fixation ayant une poutre de soutènement pour attacher le moyen d'accrochage à un giravion. La poutre de soutènement a une âme horizontale et deux profilés latéraux s'étendant en élévation à partit de cette âme horizontale. De plus, le système de fixation comprend un organe de soutènement dans un espace central séparant les profilés latéraux pour porter un moyen d'accrochage, ledit organe de soutènement étant relié à chaque profilé latéral.

Selon ce procédé, on incline chaque profilé latéral pour obtenir un profilé oblique présentant un angle obtus avec l'âme horizontale dans l'espace central pour que chaque profilé latéral se rapproche de l'âme horizontale sous l'effet d'efforts verticaux de manière à être moins agressif pour un fuselage du giravion et en ce qu'on équipe l'organe de soutènement d'une ferrure munie d'un organe ressort pour éloigner le moyen d'accrochage d'une direction dirigée selon la pesanteur.

L'invention et ses avantages apparaîtront avec plus de détails dans le cadre de la description qui suit avec des exemples de réalisation donnés à titre illustratif en référence aux figures annexées qui représentent:
- les figures 1 et 2, des schémas illustrant un premier agencement d'un moyen d'accrochage,
- les figures 3 et 4, des schémas illustrant un deuxième agencement d'un moyen d'accrochage,
- les figures 5 et 6 des schémas illustrant un premier mode de réalisation,
- les figures 7 et 8 des schémas illustrant un deuxième mode de réalisation,
- la figure 9, un schéma illustrant un troisième mode de réalisation, et
- les figures 10 et 11, des schémas explicitant le fonctionnement de l'invention.

Les éléments présents dans plusieurs figures distinctes sont affectés d'une seule et même référence.

On note que trois directions X, Y et Z orthogonales les unes par rapport aux autres sont représentées sur certaines figures.

La première direction X est dite longitudinale. Le terme « longitudinal » est relatif à toute direction du système de fixation parallèle à la première direction X.

La deuxième direction Y est dite transversale. Le terme « transversal » est relatif à toute direction du système de fixation parallèle à la deuxième direction Y.

Enfin, la troisième direction Z est dite en élévation. L'expression « en élévation » est relative à toute direction du système de fixation parallèle à la troisième direction Z.

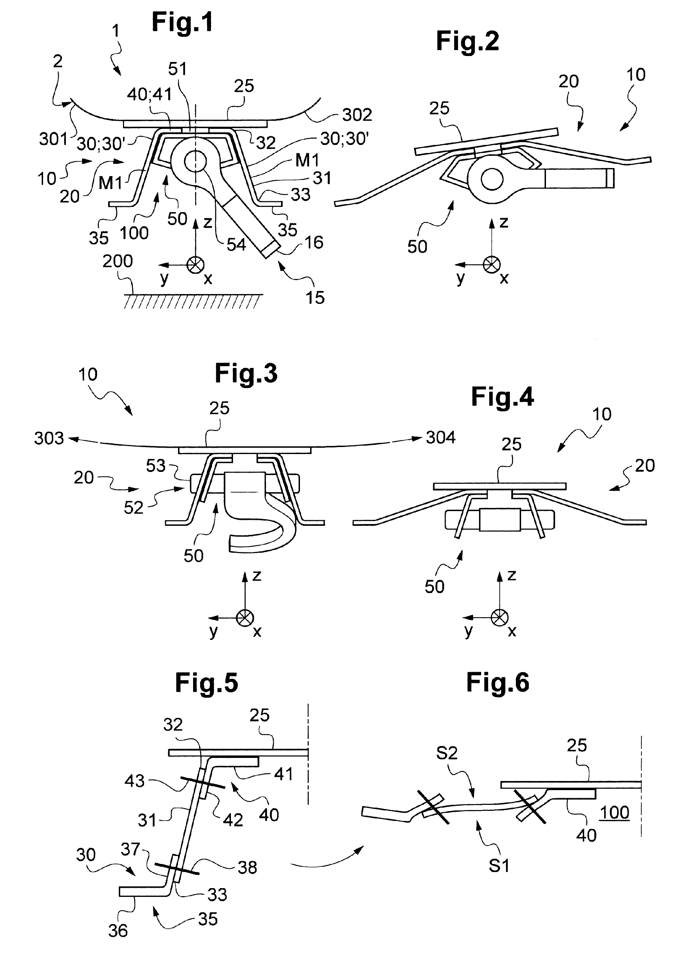

La figure 1 présente un giravion 1 muni d'un fuselage 2.

Pour porter une charge, un giravion est équipé d'un système de fixation 10.

Ce système de fixation 10 inclut un moyen d'accrochage 15. Ce moyen d'accrochage peut être un crochet 16 ou encore un crochet-délesteur par exemple. Le moyen d'accrochage 15 peut être relié à une charge externe par une élingue notamment.

Pour attacher le moyen d'accrochage 15 au giravion, le système de fixation inclut une poutre de soutènement 20 coopérant avec un organe de soutènement 50.

Cette poutre de soutènement 20 est munie d'une âme horizontale 25 s'étendant selon une direction longitudinale X. La poutre de soutènement peut s'étendre selon un axe allant de l'avant 303 vers l'arrière 304 du fuselage selon la représentation de la figure 1, ou encore du coté gauche 302 au côté droit 301 du fuselage selon la figure 3.

De plus et en référence à la figure 1, la poutre de soutènement 20 comprend deux profilés latéraux 30 s'étendant de part et d'autre d'un espace central 100. Plus précisément, les deux profilés latéraux 30 s'étendent à partir de l'âme horizontale vers le sol 200 lorsque le giravion est posé sur ce sol. Chaque profilé latéral peut s'étendre selon la direction longitudinale sur une partie ou toute la longueur de l'âme horizontale.

L'espace central 100 est donc ouvert, tout en étant délimité en élévation par l'âme horizontale 25 et transversalement par les profilés latéraux 30.

L'organe de soutènement s'étend alors dans l'espace central 100 d'un premier profilé latéral 30' vers un deuxième profilé latéral 30". Le moyen d'accrochage est alors pendu à l'organe de soutènement, en étant éventuellement libre d'effectuer une rotation par rapport à cet organe de soutènement.

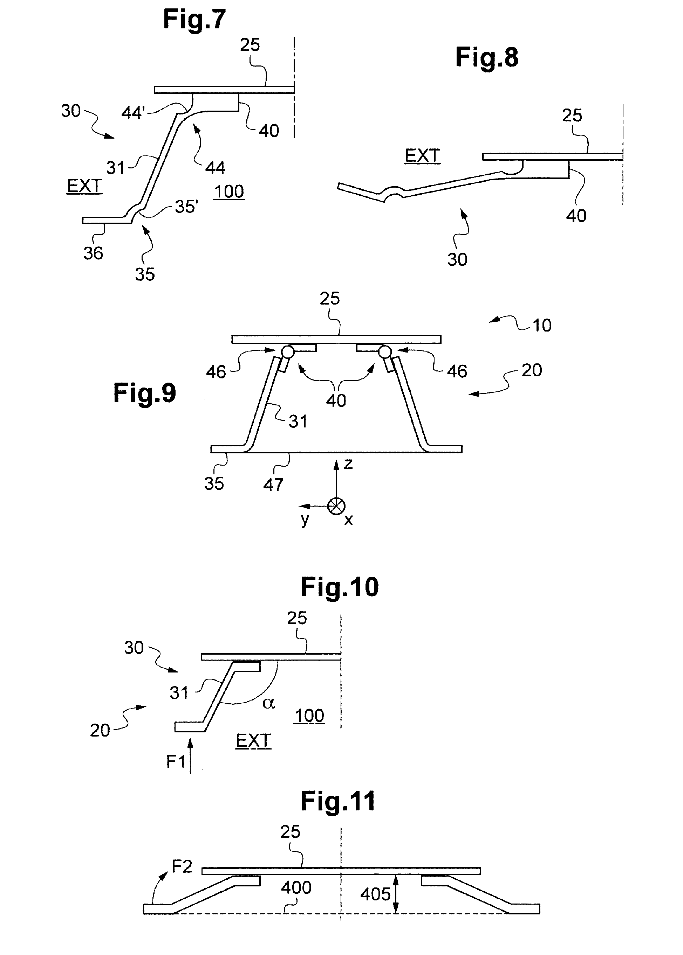

En référence à la figure 10, chaque profilé latéral 30 est un profilé oblique présentant un angle obtus α avec l'âme horizontale dans le secteur angulaire définissant l'espace interne 10. Les deux profilés latéraux délimitent alors transversalement un espace interne évasé et tronconique s'étendant en élévation d'une grande base débouchant sur l'extérieur EXT de la poutre de soutènement 20 vers une petite base au niveau de l'âme horizontale.

La poutre de soutènement est donc dépourvue de profilés latéraux verticaux, en étant au contraire pourvue de profilés latéraux obliques.

En référence aux figures 10 et 11, un effort vertical F1 exercé sur un profilé latéral oblique induit un écrasement du profilé latéral par le biais d'une rotation selon la flèche F2. Les deux profilés latéraux tendent alors à s'éloigner l'un de l'autre, en agrandissant la grande base 400. Par contre, la hauteur 405 de l'espace interne diminue.

Dès lors et en référence à la figure 1, chaque profilé latéral 30 inclut un voile 31 incliné présentant ledit angle obtus α avec l'âme horizontale. Chaque voile s'étend alors en élévation vers le sol selon une direction inclinée par rapport à la pesanteur d'une extrémité de liaison 32 reliée à l'âme horizontale 25 vers une extrémité libre 33.

Pour faciliter l'introduction d'efforts verticaux dans les profilés latéraux 30, au moins un profilé latéral peut comprendre une portion d'appui 35 reliée à l'extrémité libre 33 d'un voile.

La portion d'appui 35 peut être plane et parallèle à l'âme horizontale. De plus, la portion d'appui 35 peut s'étendre transversalement à partir du voile à l'opposé de l'espace central 100.

Par ailleurs, au moins un profilé latéral 30 comprend une semelle 40 pour fixer un voile à l'âme horizontale 25. Chaque semelle 40 inclut alors à minima une portion horizontale 41 fixée à l'âme horizontale 25.

La semelle est en outre solidaire d'un voile.

Selon le premier mode de réalisation des figures 5 et 6, la semelle est fixée à un voile par un dispositif de fixation 43, tel qu'un dispositif muni d'au moins un rivet.

La semelle 40 comporte à cet effet une portion horizontale 41 fixée à l'âme horizontale et une portion oblique 42 fixée à un voile, et notamment à son extrémité de liaison.

De même, la portion d'appui peut comprendre un tronçon horizontal 36 et un tronçon oblique 37 qui est fixé à un voile et notamment à son extrémité libre 33.

En référence à la figure 6, la semelle 40 peut être disposée dans l'espace central. Cette semelle est alors fixée à une surface interne S1 d'un voile 31 en regard de l'espace interne 100.

A l'inverse, une portion d'appui peut être fixée à une surface externe d'un voile 31.

Selon le deuxième mode de réalisation de la figure 7, un voile et la semelle associée, voire la portion d'appui associée, forment un profilé oblique d'un seul tenant.

Eventuellement et pour favoriser le dépliage observé sur la figure 8 sous l'effet d'efforts verticaux, un voile peut comporter une zone de jonction 44 munie d'un arrondi 44'. Cet arrondi 44' peut présenter une concavité en regard de l'extérieur de la poutre de soutènement.

A l'inverse, un voile peut être relié à une portion d'appui par un arrondi présentant une concavité débouchant sur l'espace central 100.

Selon le troisième mode de réalisation de la figure 9, une semelle peut comprendre une charnière 46. En complément, un moyen de retenue 47 fusible peut relier les deux profilés latéraux.

Par ailleurs et en référence à la figure 1, l'organe de soutènement 50 comporte une ferrure 51 qui coopère avec les profilés latéraux 30.

Par suite, la ferrure 51 est fixée à chaque voile 31. Par exemple, cette ferrure est fixée entre le milieu M1 de chaque voile 31 et une extrémité de liaison 32 de chaque voile 31. De plus, la ferrure 51 est fixée aux semelles 40 des profilés latéraux.

En référence à la figure 3, chaque voile 31 peut comporter un orifice 52 traversé par un axe 53 de la ferrure 51.

Par ailleurs et en référence à la figure 1, la ferrure 51 est munie d'un organe ressort 54 pour tendre à éloigner le moyen d'accrochage 15 d'une direction verticale dirigée selon la pesanteur, sous l'effet d'une rotation. L'organe ressort est par exemple agencé entre la ferrure et le moyen d'accrochage.

Ainsi, lors d'un atterrissage de type crash et en référence aux figures 2 et 4, les profilés latéraux s'écartent l'un de l'autre pour provoquer un écrasement de la poutre de soutènement. De même, le moyen d'accrochage tend à se coucher sur le sol.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

D'autre part, les figures 1 et 2, puis 3 et 4 montrent l'agencement d'une poutre de soutènement longitudinale. Le même principe est réalisable avec une poutre de soutènement qui serait transversale, c'est-à-dire que sa direction serait parallèle à deuxième direction Y.

Ce type de choix (longitudinal / transversal) est généralement guidé par l'architecture générale de la machine (position des poutres longitudinales et des cadres forts).

## Revendications

1. Système de fixation (10) muni d'un moyen d'accrochage (15) pour accrocher une charge externe à un giravion, ledit système de fixation (10) ayant une poutre de soutènement (20) pour attacher le moyen d'accrochage (15) à un giravion, ladite poutre de soutènement (20) ayant une âme horizontale (25) et deux profilés latéraux (30) s'étendant en élévation à partit de ladite âme horizontale (25), ledit système de fixation (10) ayant un organe de soutènement (50) dans un espace central (100) séparant lesdits profilés latéraux (30) pour porter un moyen d'accrochage (15), ledit organe de soutènement (50) étant relié à chaque profilé latéral (30),
chaque profilé latéral (30) incluant un voile (31) en élévation relié à l'âme horizontale (25), chaque voile (31) présentant un angle obtus (α) avec ladite âme horizontale (25) dans ledit espace central (100), chaque profilé latéral (30) étant un profilé oblique pouvant se rapprocher de ladite âme horizontale (25) sous l'effet d'efforts verticaux (F1), **caractérisé en ce que** ledit organe de soutènement (50) comporte une ferrure (51) coopérant avec lesdits profilés latéraux (30), ladite ferrure (51) comportant un organe ressort (54) pour éloigner un moyen d'accrochage (15) d'une direction dirigée selon la pesanteur.

2. Système selon la revendication 1,
**caractérisé en ce que**, au moins un voile (31) s'étendant d'une extrémité de liaison (32) reliée à l'âme horizontale (25) vers une extrémité libre (33), au moins un profilé latéral (30) comporte une portion d'appui (35) solidaire de l'extrémité libre (33) du voile (31).

3. Système selon la revendication 2,
**caractérisé en ce que** ladite portion d'appui (35) est parallèle à ladite âme horizontale (25).

4. Système selon l'une quelconque des revendications 1 à 3,
**caractérisé en ce que**, au moins un profilé latéral (30) comprenant une semelle (40) pour être fixé à l'âme horizontale (25), ladite semelle (40) est fixée à un voile (31) par un dispositif de fixation (43).

5. Système selon la revendication 4,
**caractérisé en ce que** ladite semelle (40) est agencée dans ledit espace central (100).

6. Système selon l'une quelconque des revendications 1 à 3,
**caractérisé en ce que**, au moins un profilé latéral (30) comprenant une semelle (40) pour être fixé à l'âme horizontale (25), ladite semelle (40) est solidaire d'un voile (31) en formant une pièce mécanique d'un seul tenant.

7. Système selon la revendication 6,
**caractérisé en ce qu'**un voile (31) comporte une zone de jonction (44) à une semelle (40), ladite zone de jonction (44) présentant un arrondi (44') pour favoriser le fléchissement du voile (31) vers l'âme horizontale (25).

8. Système selon l'une quelconque des revendications 1 à 3,
**caractérisé en ce qu'**au moins un voile (31) est articulé à ladite âme horizontale (25) par une charnière (46), ledit système de fixation (10) incluant un moyen de retenue (47) reliant un profilé latéral à l'autre profilé latéral.

9. Système selon l'une quelconque des revendications 1 à 8, **caractérisé en ce que** ladite ferrure (51) est fixée à chaque voile (31) entre le milieu (M1) de chaque voile (31) et une extrémité de liaison (32) de chaque voile (31) qui est reliée à l'âme horizontale (25).

10. Système selon l'une quelconque des revendications 1 à 9,
**caractérisé en ce que**, au moins un profilé latéral (30) comprenant une semelle (40) pour être fixé à l'âme horizontale (25), ladite ferrure (51) est fixée à chaque semelle (40).

11. Système selon l'une quelconque des revendications 9 à 10,
**caractérisé en ce que** chaque voile (31) comporte un orifice (52) traversé par un axe (53) de ladite ferrure (51).

12. Giravion (1),
**caractérisé en ce que** ce giravion (1) comporte un système de fixation (10) selon l'une quelconque des revendications 1 à 11.

13. Procédé pour fixer une charge externe à un giravion (1) à l'aide d'un système de fixation (10) muni d'un moyen d'accrochage (15), ledit système de fixation (10) ayant une poutre de soutènement (20) pour attacher le moyen d'accrochage (15) à un giravion (1), ladite poutre de soutènement (20) ayant une âme horizontale (25) et deux profilés latéraux (30) s'étendant en élévation à partir de ladite âme horizontale (25), ledit système de fixation (10) ayant un organe de soutènement (50) dans un espace central (100) séparant lesdits profilés latéraux (30) pour porter un moyen d'accrochage (15), ledit organe de soutènement (50) étant relié à chaque profilé latéral (30),
chaque profilé latéral (30) étant incliné pour obtenir un profilé oblique présentant un angle obtus (α) avec ladite âme horizontale (25) dans ledit espace central (100) pour que chaque profilé latéral (30) se rapproche de ladite âme horizontale (25) sous l'effet d'efforts verticaux (F1) de manière à être moins agressif pour un fuselage (2) du giravion (1), **caractérisé en ce qu'**on équipe l'organe de soutènement d'une ferrure munie d'un organe ressort pour éloigner le moyen d'accrochage d'une direction dirigée selon la pesanteur.

## Patentansprüche

1. Befestigungssystem (10) mit einem Ankoppelmittel (15) zum Ankoppeln einer äußeren Last an einem Drehflügelflugzeug, wobei das Befestigungssystem (10) einen Stützträger (20) aufweist zum Befestigen des Ankoppelmittels (15) an einem Drehflügelflugzeug, wobei der Stützträger (20) ein horizontales Stegblech (25) und zwei seitliche Profile (30) aufweist, die sich vertikal ausgehend von dem horizontalen Stegblech (25) erstrecken, wobei das Befestigungssystem (10) in einem mittleren Raum (100), der die seitlichen Profile (30) trennt, ein Stützorgan (50) aufweist, um ein Ankoppelmittel (15) zu tragen, wobei das Stützorgan (50) mit jedem seitlichen Profil (30) verbunden ist, wobei jedes seitliche Profil (30) eine vertikale Wand (31) aufweist, die mit dem horizontalen Stegblech (25) verbunden ist, wobei jede Wand (31) einen stumpfen Winkel (α) mit dem horizontalen Stegblech (25) in dem mittleren Raum (100) einschließt, wobei jedes seitliche Profil (30) ein schräges Profil ist, das sich unter der Einwirkung vertikaler Kräfte (F1) an das horizontale Stegblech (25) annähern kann,
dadurch gekenntzeichnet, dass das Stützorgan (50) einen Beschlag (51) aufweist, der mit den seitlichen Profilen (30) zusammenwirkt, wobei der Beschlag (51) ein Federorgan (54) aufweist, um ein Ankoppelmittel (15) von einer Richtung fernzuhalten, die durch das Gewicht vorgegeben ist.

2. System nach Anspruch 1,
**dadurch gekennzeichnet, dass** mindestens eine Wand (31) sich von einem Verbindungsende (32), das mit dem horizontalen Stegblech (25) verbunden ist, bis zu einem freien Ende (33) erstreckt, wobei mindestens ein seitliches Profil (30) einen Andruckbereich (35) aufweist, der mit dem freien Ende (33) der Wand (31) fest verbunden ist.

3. System nach Anspruch 2,
**dadurch gekennzeichnet, dass** der Andruckbereich (35) parallel zu dem horizontalen Stegblech (25) verläuft.

4. System nach einem der Ansprüche 1 bis 3,
**dadurch gekennzeichnet, dass** mindestens ein seitliches Profil (30) eine Grundplatte (40) aufweist, die mit dem horizontalen Stegblech (25) fest verbunden ist, wobei die Grundplatte (40) mit einer Befestigungsvorrichtung (43) an einer Wand (31) befestigt ist.

5. System nach Anspruch 4,
**dadurch gekennzeichnet, dass** die Grundplatte (40) in dem mittleren Raum (100) angeordnet ist.

6. System nach einem der Ansprüche 1 bis 3,
**dadurch gekennzeichnet, dass** mindestens ein seitliches Profil (30) eine Grundplatte (40) zu seiner Befestigung an dem horizontalen Stegblech (25) aufweist, wobei die Grundplatte (40) mit einer Wand (31) fest verbunden ist, indem sie mit dieser einstückig ausgeformt ist.

7. System nach Anspruch 6,
**dadurch gekennzeichnet, dass** eine Wand (31) einen Verbindungsbereich (44) mit einer Grundplatte (40) aufweist, wobei der Verbindungsbereich (44) eine Abrundung (44') aufweist, um das Durchbiegen der Wand (31) zum horizontalen Stegblech (25) hin zu begünstigen.

8. System nach einem der Ansprüche 1 bis 3,
**dadurch gekennzeichnet, dass** mindestens eine Wand (31) mit einem Scharnier (46) an dem horizontalen Stegblech (25) angelenkt ist, wobei das Befestigungssystem (10) ein Rückhaltemittel (47) umfasst, das ein seitliches Profil mit dem anderen seitlichen Profil verbindet.

9. System nach einem der Ansprüche 1 bis 8,
**dadurch gekennzeichnet, dass** der Beschlag (51) zwischen der Mitte (M1) einer jeden Wand (31) und einem Verbindungsende (32) jeder Wand (31), das mit dem horizontalen Stegblech (25) verbunden ist, befestigt ist.

10. System nach einem der Ansprüche 1 bis 9,
**dadurch gekennzeichnet, dass** mindestens ein seitliches Profil (30) eine Grundplatte (40) zu seiner Befestigung an dem horizontalen Stegblech (25) aufweist, wobei der Beschlag (51) an jeder Grundplatte (40) befestigt ist.

11. System nach einem der Ansprüche 9 bis 10,
**dadurch gekennzeichnet, dass** jede Wand (31) eine Öffnung (52) aufweist, die von einer Achse (53) des Beschlags (51) durchquert wird.

12. Drehflügelflugzeug (1),
**dadurch gekennzeichnet, dass** das Drehflügelflugzeug (1) ein Befestigungssystem (10) nach einem der Ansprüche 1 bis 11 aufweist.

13. Verfahren zum Befestigen einer äußeren Last an einem Drehflügelflugzeug (1) mit Hilfe eines Befestigungssystems (10), welches mit einem Ankoppelmittel (15) versehen ist, wobei das Befestigungssystem (10) einen Stützträger (20) aufweist zum Befestigen des Ankoppelmittels (15) an einem Drehflügelflugzeug (1), wobei der Stützträger (20) ein horizontales Stegblech (25) und zwei seitliche Profile (30) aufweist, die sich vertikal ausgehend von dem horizontalen Stegblech (25) erstrecken, wobei das Befestigungssystem (10) in einem mittleren Raum (100), der die seitlichen Profile (30) trennt, ein Stützorgan (50) aufweist, um ein Ankoppelmittel (15) zu tragen, wobei das Stützorgan (50) mit jedem seitlichen Profil (30) verbunden ist, wobei jedes seitliche Profil (30) geneigt ist, um ein schräges Profil zu erhalten, welches mit dem horizontalen Stegblech (25) in dem mittleren Raum (100) einen stumpfen Winkel einschließt, damit sich jedes seitliche Profil (30) unter der Einwirkung vertikaler Kräfte (F1) an das horizontale Stegblech (25) so annähert, dass ein Rumpf (2) des Drehflügelflugzeugs (1) weniger aggressiv in Anspruch genommen wird,
**dadurch gekennzeichnet, dass** das Stützorgan mit einem Beschlag ausgerüstet wird, der mit einem Federorgan versehen ist, um das Ankoppelmittel von einer Richtung fernzuhalten, die von dem Gewicht vorgegeben wird.

## Claims

1. Fastening system (10) provided with an attaching means (15) for attaching an external load to a rotorcraft, said fastening system (10) having a support beam (20) for attaching the attaching means (15) to a rotorcraft, said support beam (20) having a horizontal core (25) and two lateral profiles (30) extending in elevation from said horizontal core (25), said fastening system (10) having a support member (50) in a central space (100) separating said lateral profiles (30) in order to carry an attaching means (15), said support member (50) being connected to each lateral profile (30), each lateral profile (30) including a web (31) in elevation connected to the horizontal core (25), each web (31) forming an obtuse angle (α) with said horizontal core (25) in said central space (100), each lateral profile (30) being an oblique profile capable of moving closer to said horizontal core (25) under the effect of vertical forces (F1), **characterised in that** said support member (50) comprises a fitting (51) co-operating with said lateral profiles (30), said fitting (51) comprising a spring member (54) for moving an attaching means (15) away from a direction directed according to gravity.

2. System according to claim 1,
**characterised in that**, at least one web (31) extending from a connection end (32) connected to the horizontal core (25) towards a free end (33), at least one lateral profile (30) comprises a bearing portion (35) secured to the free end (33) of the web (31).

3. System according to claim 2,
**characterised in that** said bearing portion (35) is parallel to said horizontal core (25).

4. System according to any one of claims 1 to 3, **characterised in that**, at least one lateral profile (30) comprising a sole (40) for fastening to the horizontal core (25), said sole (40) is fastened to a web (31) by a fastening device (43).

5. System according to claim 4,
**characterised in that** said sole (40) is arranged in said central space (100).

6. System according to any one of claims 1 to 3,
**characterised in that**, at least one lateral profile (30) comprising a sole (40) for fastening to the horizontal core (25), said sole (40) is integral with a web (31) forming a one-piece mechanical part.

7. System according to claim 6,
**characterised in that** a web (31) comprises a junction zone (44) with a sole (40), said junction zone (44) having a rounding (44') to promote the bending of the web (31) towards the horizontal core (25).

8. System according to any one of claims 1 to 3,
**characterised in that** at least one web (31) is articulated to said horizontal core (25) by a hinge (46), said fastening system (10) including a retaining means (47) connecting one lateral profile to the other lateral profile.

9. System according to any one of claims 1 to 8,
**characterised in that** said fitting (51) is fastened to each web (31) between the middle (M1) of each web (31) and a connecting end (32) of each web (31) which is connected to the horizontal core (25).

10. System according to any one of claims 1 to 9,
**characterised in that**, at least one lateral profile (30) comprising a sole (40) for fastening to the horizontal core (25), said fitting (51) is fastened to each sole (40).

11. System according to any one of claims 9 to 10,
**characterised in that** each web (31) comprises an orifice (52) through which passes a pin (53) of said fitting (51).

12. Rotorcraft (1),
**characterised in that** said rotorcraft (1) comprises a fastening system (10) according to any one of claims 1 to 11.

13. Method for fastening an external load to a rotorcraft (1) with the help of a fastening system (10) provided with an attaching means (15), said fastening system (10) having a support beam (20) for attaching the attaching means (15) to a rotorcraft (1), said support beam (20) having a horizontal core (25) and two lateral profiles (30) extending in elevation from said horizontal core (25), said fastening system (10) having a support member (50) in a central space (100) separating said lateral profiles (30) in order to carry an attaching means (15), said support member (50) being connected to each lateral profile (30), each lateral profile (30) being inclined in order to obtain an oblique profile forming an obtuse angle (α) with said horizontal core (25) in said central space (100) so that each lateral profile (30) moves closer to said horizontal core (25) under the effect of vertical forces (F1) so as to be less aggressive for a fuselage (2) of the rotorcraft (1), **characterised in that** the support member is equipped with a fitting provided with a spring member for moving the attaching means away from a direction directed according to gravity.
